# FASCICULE DE BREVET EUROPEEN

(11) **EP 0 965 277 B1**
(45) Date de publication et mention de la délivrance du brevet: **20.02.2002**
(21) Numéro de dépôt: 99401499.1
(22) Date de dépôt: 17.06.1999
(51) Int. Cl.: A23G 9/02

(54) **Dessert glacé**
Gefrorene Süssspeise
Frozen dessert

(30) Priorité: 19.06.1998 FR 9807780
(43) Date de publication de la demande: 22.12.1999
(73) Titulaire: Roquette Frères, 62136 Lestrem (FR)
(72) Inventeur: Ribadeau-Dumas, Guillaume, 59237 Verlinghem (FR)
(74) Mandataire: Boulinguiez, Didier

(56) Documents cités:
- EP-A- 0 009 325
- EP-A- 0 287 957
- EP-A- 0 497 439
- EP-A- 0 511 761
- EP-A- 0 788 744
- US-A- 5 486 372
- PATENT ABSTRACTS OF JAPAN vol. 014, no. 024 (C-677), 18 janvier 1990 (1990-01-18) & JP 01 265852 A (MITSUBISHI KASEI CORP;OTHERS: 01), 23 octobre 1989 (1989-10-23) -& DATABASE WPI Derwent Publications Ltd., London, GB; AN 89-353711 XP002093926
- PATENT ABSTRACTS OF JAPAN vol. 098, no. 010, 31 août 1998 (1998-08-31) & JP 10 117694 A (NIKKEN CHEM CO LTD), 12 mai 1998 (1998-05-12)

## Description

L'invention a pour objet un dessert glacé comprenant de l'érythritol comme matière sucrante et de texture et un agent de contrôle de la fonte du dessert glacé choisi dans le groupe constitué par les dextrines et les dextrines indigestibles, seules ou en mélange entre elles.

En particulier, l'invention concerne un tel dessert glacé sans sucres ajoutés.

L'invention concerne également l'utilisation d'un mélange d'érythritol et d'un composé choisi dans le groupe constitué par les dextrines, les dextrines indigestibles, seules ou en mélange entre elles dans un dessert glacé.

Par le qualificatif "sans sucres ajoutés", on désigne dans le domaine de la confiserie, les articles qui ne contiennent pas de mono- ou disaccharides, ces sucres étant remplacés par des polyols tels que le xylitol, le mannitol, le sorbitol ou les hydrolysats d'amidon hydrogénés, le sorbitol et le maltitol étant de loin les plus utilisés.

C'est ainsi que l'on trouve couramment, sur le marché, des crèmes glacées sans sucres ajoutés dites diététiques et formulées en ayant recours à au moins certains des substituts des sucres énumérés ci-dessus.

Le document DE-A-3 000 465 mentionne l'application des hydrolysats d'amidon hydrogénés à la fabrication des crèmes glacées sans apporter aucun exemple.

Les documents GB-A-1 239 056 et CA-A-899 143 mentionnent la possibilité d'utiliser des hydrolysats d'amidon hydrogénés dans la fabrication de produits alimentaires peu fermentescibles parmi lesquels les crèmes glacées sont citées sans aucune exemplification.

Le document EP-A-0 152 351 an nom de la Demanderesse décrit une crème glacée sans sucre comprenant
à titre d'agent sucrant et de texture un hydrolysat d'amidon hydrogéné ayant la composition suivante : 0,1 à 35% de sorbitol, 8 à 80% de maltitol et le complèment à 100% de polyols de degré de polymérisation supérieur ou égal à 3.

Il se trouve enfin que les desserts glacés sans sucres ajoutés de l'art antérieur ne présentent aucunement ni les caractéristiques de texture, ni les caractéristiques organoleptiques des crèmes glacées classiques; en particulier, leurs caractéristiques de corps, de fonte, d'onctuosité et de tenue en bouche ne sont pas satisfaisantes. En outre, ces desserts glacés de l'art antérieur sont laxatifs. Ils ne sont pas également faiblement calorique.

L'invention a pour but, surtout, de proposer, pour répondre aux besoins des industries de la confiserie et des produits laitiers, un dessert glacé, en particulier sans sucres ajoutés et, plus particulièrement, à valeur calorique réduite et n'engendrant pas de troubles digestifs (ballonnements, diarrhées,...) chez le consommateur, dont les caractéristiques physiques, texturales et organoleptiques se rapprochent très sensiblement de celles des desserts glacés traditionnels préparés avec du saccharose.

Le document décrit JP-A-10117694 décrit un sorbet faiblement calorique comprenant de l'érythritol et un agent de contrôle de la fonte choisi dans le groupe constitué par les sucres, les alcools de sucres et les polydextroses.

Il s'ensuit que le dessert glacé conforme à l'invention est caractérisé par le fait qu'il comprend de l'érythritol comme matière sucrante et de texture et un agent de contrôle de la fonte du dessert glacé choisi dans le groupe constitué par les dextrines et les dextrines indigestibles, seules ou en mélange entre elles.

L'invention concerne encore l'utilisation d'un mélange d'érythritol et d'un composé choisi dans le groupe constitué par les dextrines et les dextrines indigestibles, seules ou en mélange entre elles dans un dessert glacé.

Dans la présente invention, on entend par "dessert glacé", les produits alimentaires du type glaces à l'eau, glaçons, glaces au lait, crèmes glacées, glaces aux fruits, sorbets ou équivalents.

Au sens de la présente invention :
- On entend par dextrines, les produits obtenus par chauffage de l'amidon amené à un faible taux d'humidité, en présence généralement de catalyseurs acides ou basiques. Ce grillage à sec de l'amidon, le plus couramment en présence d'acide, entraîne à la fois une dépolymérisation de l'amidon et un réarrangement des fragments d'amidon obtenus, conduisant à l'obtention de molécules très ramifiées. De tels produits peuvent également être obtenus par extrusion, tel que décrit dans la demande de brevet FR 97.07161 dont la Demanderesse est titulaire.
- On entend par dextrines indigestibles, les produits obtenus en faisant agir une Ó-amylase sur une solution aqueuse de dextrines telles que définies ci-dessus (hydrolyse éventuellement complétée par l'action d'une β-amylase et/ou d'une transglucosidase).

Avantageusement, le ou lesdits agents de contrôle de la fonte du dessert glacé sont hydrogénés. Selon un mode de réalisation préféré de l'invention, l'agent de contrôle de la fonte du dessert glacé est choisi dans le groupe constitué par les dextrines et les dextrines indigestibles seuls ou en mélange entre elles, hydrogénées ou non.

Dans le dessert glacé conforme à l'invention, le rapport érythritol/agent de contrôle de la fonte du dessert glacé est fixé en fonction de la texture et de la température de congélation du dessert glacé que l'on souhaite obtenir. En d'autres termes, la valeur du rapport érythritol/agent de contrôle de la fonte du dessert glacé permet de contrôler la vitesse de fusion du dessert glacé. Ainsi, plus la quantité d'érythritol dans la formulation de dessert glacé conforme à l'invention est importante, plus ce dernier aura tendance à fondre rapidement et plus, donc, le dessert glacé sera mou. Inversement, plus la quantité d'agent de contrôle de la fonte du dessert glacé dans la formulation de dessert glacé conforme à l'invention est importante, plus ce dernier aura tendance à fondre lentement et plus, donc, le dessert glacé sera dur.

Dans ce dernier cas, les avantages pour le dessert glacé conforme à l'invention sont les suivants :
- il se congèle plus rapidement;
- il peut être soutiré à une température plus élevée;
- il résiste mieux à la fusion, fond plus lentement et a moins tendance à fuir;
- il résiste mieux aux chocs thermiques.

Dans la présente invention, ce rapport érythritol/agent de contrôle de la fonte du dessert glacé est compris entre 1/100 et 100/1, et de préférence entre 10/100 et 100/10, ces valeurs permettant d'obtenir, en fonction de recettes de desserts glacés déterminées, le meilleur compromis entre les propriétés gustatives, de pouvoir sucrant, de texture et de tenue en bouche.

Le dessert glacé selon l'invention comprend 5 % à 99%, de préférence de 10 à 99 %, et plus préférentiellement encore 30 à 70 % en poids d'érythritol par rapport à la matière sucrante et de texture.

Pour renforcer la saveur sucrée du dessert glacé conforme à l'invention, il est possible d'y adjoindre au moins un édulcorant intense. Avantageusement, ce dernier est choisi dans le groupe constitué par l'aspartame, la saccharine, l'acésulfame, la thaumatine, le cyclamate, le sucralose, les stéviosides ou équivalents, seuls ou en mélange entre eux.

Selon un mode de réalisation préférentiel de l'invention, l'agent de contrôle de la fonte du dessert glacé est choisi dans le groupe constitué par les dextrines et les dextrines indigestibles, seules ou en mélange entre elles, le dessert glacé étant ainsi sans sucres ajoutés, et à faible potentiel laxatif.

Selon un autre mode de réalisation préférentiel de l'invention, le dessert glacé est délactosé et l'agent de contrôle de la fonte d'un dessert glacé est choisi dans le groupe constitué par les dextrines et les dextrines indigestibles seules ou en mélange entre elles, le dessert glacé étant ainsi faiblement calorique, non cariogène et non laxatif.

D'autres avantages et caractéristiques de la présente invention apparaîtront à la lecture des exemples qui suivent, relatifs à l'utilisation d'un mélange d'érythritol et d'un composé choisi dans le groupe constitué par les dextrines, et les dextrines indigestibles, seules ou en mélange entre elles dans un dessert glacé. Ces exemples sont donnés à titre illustratif mais non limitatif.

### EXEMPLE 1 : DESSERT GLACE

### 1 - Formules

**TABLEAU I**

| | Dessert glacé témoin | Essai 1 Erythritol Dextrine |
|---|---|---|
| Saccharose | 5,8 % | - |
| Erythritol | - | 7,9 % |
| FLOLYS® E7085S∗ | 16,7 % | - |
| Dextrine hydrogénée (95,1 % MS) | - | 12,7 % |
| MGLA (99,8 % MS) ∗∗∗ | 5,4 % | 5,4 % |
| Lait écrémé en poudre (96,7 % MS) | 1,0 % | 0,77 % |
| Lait écrémé pasteurisé (9,3 % MS) | 70,6 % | 72,7 % |
| Stabilisant - émulsifiant Cremodan® SE 30∗∗∗∗ | 0,5 % | 0,5 % |
| Aspartame | - | 0,03 % |
| Arôme Vanille | qs | qs |
| colorant | qs | qs |
| | 100,0 % | 100,0 % |

| | | |
|---|---|---|
| ∗ Sirop de glucose commercialisé par la société Demanderesse | | |
| ∗∗∗ MGLA : Matières Grasse Laitière Anhydre | | |
| ∗∗∗∗ Commercialisé par la Société GRINSTED | | |

### 2 - Mode opératoire

- On mélange sous agitation le lait écrémé, le lait en poudre, les sucres ou l'érythritol et l'agent de contrôle de la fonte du dessert glacé, la matière grasse et le stabilisant-émulsifiant.
- On chauffe vers 50°C pour bien dissoudre les sucres ou l'érythritol et l'agent de contrôle de la fonte du dessert glacé et fondre la matière grasse.
- On pasteurise 3 min à 80°C puis on passe le mix refroidi à 50°C sur un homogénéisateur sous pression à 200 bars.
- On verse le mix ainsi pasteurisé et homogénéisé dans une cuve munie d'un agitateur.
- On ajoute le colorant puis l'arôme et l'aspartame et on laisse maturer pendant 5 à 10 h.
- On foisonne puis on surgèle à -40°C pendant 24 h.
- On stocke au congélateur à -18°C.

### 3 - Caractéristiques analytiques des desserts glacés produits

**TABLEAU II**

| | Dessert glacé témoin | Essai 1 Erythritol Dextrine |
|---|---|---|
| Extrait sec (%) | 33,4 % | 33,4 % |
| Matière grasse (%) | 5,4 % | 5,4 % |
| Extrait sec sucrant (ESS) | 20,0 % | 20,0 % |
| Composition ESS (% sur sec) | 29 % saccharose | 39,5 % Erythritol |
| | 71 % FLOLYS® E70 | 60,5 % Dextrine |
| Extrait sec dégraissé du lait | 7,5 % | 7,5 % |
| | | |
| Valeur calorique du dessert glacé∗ | - 163 Kcal/100 g | - 98 Kcal/100 g |
| | | |
| Réduction calorique par rapport au dessert glacé témoin | 0 % | -40 % |

| | | |
|---|---|---|
| ∗ cf Point 4 | | |

### 4 - Valeurs caloriques retenues pour l'élaboration des formules

| | |
|---|---|
| Saccharose | 4 Kcal/g sec, |
| FLOLYS ^{(R)} E7085S | 4 Kcal/g sec, |
| ROCLYS ^{(R)} B3879S | 4 Kcal/g sec, |
| Erythritol | 0,4 Kcal/g sec, |
| Dextrine | 1 Kcal/g sec, |
| MGLA | 9 Kcal/g sec, |
| Lait écrémé en poudre | 4 Kcal/g sec, |
| Lait écrémé pasteurisé | 4 Kcal/g sec, |
| Stabilisant - émulsifiant | 9 Kcal/g sec. |

### 5 - Caractéristiques des desserts glacés produits

**TABLEAU III**

| | Dessert glacé témoin | Essai 1 Erythritol Dextrine |
|---|---|---|
| Taux de foisonnement⁽¹⁾ | 100 % | 100 % |
| Viscosité du mix non foisonné⁽²⁾ | 60 mPa.s | 40 mPa.s |
| Fusion - Point de goutte⁽³⁾ | 11 min | 23 min |
| % glace fondue après | | |
| | | |
| - 1 h à 20°C | 31 % | 9 % |
| - 4 h à 20°C | 74 % | 55 % |
| Saveur sucrée⁽⁴⁾ | +++ | +++ |
| Vitesse de fusion en bouche⁽⁴⁾ | +++ | +++ |
| Dureté apparente⁽⁴⁾ | +++ | ++++ |
| Arrière goût⁽⁴⁾ | NON | NON |

(1) Taux de foisonnement = 100 x (Volume mix foisonné - Volume initial mix) / Volume initial mix
(2) Viscosité des mix calculées à un gradient de cisaillement de 100 s⁻¹ au moyen d'un Carri-med (appareil commercialisé par la Société T.A. INSTRUMENT) à 10°C.
(3) Protocole : un pot de 200 ml (Ø = 8,5 cm) de crème glacée ayant été conservée à - 20°C est renversé sur une grille en acier inoxydable (maille carrés de 0,25 cm de côté). On pratique l'expérience dans une salle conditionnée à + 20°C. Le temps de chute de la première goutte est le « point de goutte ».
(4) Analyse sensorielle par 10 dégustateurs non entraînés.

### EXEMPLE 2 : CREMES GLACEES

### 1 - Formules

**TABLEAU IV**

| | Crème glacée témoin | Essai 2 Erythritol Dextrine |
|---|---|---|
| Saccharose | 14,1 % | - |
| Erythritol | - | 5,1 % |
| | | |
| ROCLYs^{(R)}B83879S∗ | 4,4 % | - |
| Dextrine (95,1 % MS) | - | 13,1 % |
| | | |
| MGLA 599,8 % MS) ∗∗ | 9,7 % | 9,7 % |
| Lait écrémé en poudre (96,7 % MS) | 7,3 % | 7,57 % |
| Lait écrémé pasteurisé (9,3 % MS) | 64,0 % | 64,0 % |
| Stabilisant - émulsifiant Cremodan^{(R)} SE 30∗∗∗ | 0,5 % | 0,5 % |
| Aspartame | - | 0,003 % |
| Arôme Vanille | qs | qs |
| Colorant jaune d'oeuf | qs | qs |
| | 100,0 % | 100,0 % |

| | | |
|---|---|---|
| ∗ Sirop de glucose commercialisé par la Société Demanderesse | | |
| ∗∗ MGLA : Matière Grasse Laitière Anhydre | | |
| ∗∗∗ Commercialisé par la Société GRINSTED | | |

### 2 - Mode opératoire

- On mélange sous agitation le lait écrémé, le lait en poudre, les sucres ou l'érythritol et l'agent de contrôle de la fonte du dessert glacé, la matière grasse et le stabilisant-émulsifiant.
- On chauffe vers 50°C pour bien dissoudre les sucres ou l'érythritol et l'agent de contrôle de la fonte du dessert glacé et fondre la matière grasse.
- On pasteurise 3 mn à 80°C puis on passe le mix refroidi à 50°C sur un homogénéisateur sous pression à 200 bars.
- On verse le mix ainsi pasteurisé et homogénéisé dans une cuve munie d'un agitateur.
- On ajoute le colorant puis l'arôme et l'aspartame et on laisse maturer pendant 5 à 10 h.
- On foisonne puis on surgèle à -40°C pendant 24 h.
- On stocke au congélateur à -18°C.

### - 3 - Caractéristiques des crèmes glacées produites

**TABLEAU V**

| | Crème glacée Témoin | Essai 2 Erythritol Dextrine |
|---|---|---|
| Extrait sec (%) | 40,8 % | 40,8 % |
| Matière grasse (%) | 9,7 % | 9,7 % |
| Extrait sec sucrant (ESS) | 17,6 % | 17,6 % |
| Composition ESS (% sur sec) | 80,2 % saccharose | 29 % Erythritol |
| | 19,8 % ROCLYS® B38 | 71 % Dextrine |
| Extrait sec dégraissé du lait | 13,0 % | 13,0 % |
| Valeur calorique du dessert glacé∗ | - 214 Kcal/100 g | - 159 Kcal/100 g |
| Réduction calorique par rapport au dessert glacé témoin | 0 % | 26 % |
| Taux de foisonnement⁽¹⁾ | 100 % | 100 % |
| viscosoté du mix non foisonné⁽²⁾ | 80 mPa.s | 111 mPa.s |
| Dureté⁽²) Instron | 48N | 60N |
| Fusion -Point de goutte⁽³⁾ | 15min | 22min |
| % glace fondue après | | |
| - 1 h à 20°C | 25 % | 9 % |
| - 4 h à 20°C | 67 % | 45 % |
| Saveur sucrée⁽⁴⁾ | +++ | ++ |
| vitesse de fusion en bouche⁽⁴⁾ | +++ | +++ |
| Dureté apparente⁽⁴⁾ | +++ | +++ |
| Arrière goût"' | NON | NON |
| ∗ cf. Point 4 de l'exemple 1 | | |
| (1) Taux de foisonnement = 100 * (Volume mix foisonné-Volume initial mix) / Volume initial mix | | |
| (2) cf TABLEAU III - La texture du dessert glacé est évaluée par mesure Instron de la dureté (test en pénétrométrie) par mesure de la force nécessaire (en N) à l'enfoncement de 20 mm d'un poinçon conique. | | |
| (3) cf TABLEAU III | | |
| (4) Analyse sensorielle par 10 dégustateurs non entraînés | | |

## Revendications

1. Dessert glacé comprenant de l'érythritol comme matière sucrante et de texture et un agent de contrôle de la fonte du dessert glacé choisi dans le groupe constitué par les dextrines et les dextrines indigestibles, seules ou en mélange entre elles.

2. Dessert glacé selon la revendication 1, **caractérisé par le fait qu'**il comprend de 5 à 99 % en poids d'érythritol par rapport à la matière sucrante et de texture.

3. Dessert glacé selon la revendication 1 ou 2, **caractérisé par le fait qu'**il comprend en outre au moins un édulcorant intense.

4. Dessert glacé selon l'une quelconque des revendications 1 à 3, **caractérisé par le fait que** ledit agent de contrôle de la fonte du dessert glacé est hydrogéné.

5. Dessert glacé selon l'une quelconque des revendications 1 à 4, **caractérisé par le fait qu'**il est délactosé, le dessert glacé étant ainsi faiblement calorique, non cariogène et non laxatif.

6. Dessert glacé selon la revendication 5, **caractérisé par le fait qu'**il comprend de 30 à 70% en poids d'érythritol par rapport à la matière sucrante et de texture.

7. Dessert glacé selon l'une quelconque des revendications 1 à 6, **caractérisé par le fait qu'**il est une glace à l'eau, une glace, une glace au lait, une crème glacée, une glace aux fruits, un sorbet ou équivalent.

8. Utilisation d'un mélange d'érythritol et d'un composé choisi dans le groupe constitué par les dextrines et les dextrines indigestibles, seules ou en mélange entre elles dans un dessert glacé.

## Patentansprüche

1. Gefrorene Süßspeise, die Erythritol als Süßungs- und Texturierungsstoff und ein Mittel zur Steuerung des Schmelzens der gefrorenen Süßspeise enthält, das aus der Gruppe ausgewählt ist, die aus den Dextrinen und den unverdaulichen Dextrinen allein oder in Mischung besteht.

2. Gefrorene Süßspeise nach Anspruch 1, **dadurch gekennzeichnet, dass** sie 5 bis 99 Gew.-% Erythritol, bezogen auf den Süßungs- und Texturierungsstoff, enthält.

3. Gefrorene Süßspeise nach Anspruch 1 oder 2, **dadurch gekennzeichnet, dass** sie außerdem mindestens ein intensives Süßungsmittel enthält.

4. Gefrorene Süßspeise nach einem der Ansprüche 1 bis 3, **dadurch gekennzeichnet, dass** das Mittel zur Steuerung des Schmelzens der gefrorenen Süßspeise hydrogeniert ist.

5. Gefrorene Süßspeise nach einem der Ansprüche 1 bis 4, **dadurch gekennzeichnet, dass** sie delactosiert ist, wobei die gefrorene Süßspeise auf diese Weise niederkalorisch, nicht kariogen und nicht abführend ist.

6. Gefrorene Süßspeise nach Anspruch 5, **dadurch gekennzeichnet, dass** sie 30 bis 70 Gew.-% Erythritol, bezogen auf den Süßungs- und Texturierungsstoff, enthält.

7. Gefrorene Süßspeise nach einem der Ansprüche 1 bis 6, **dadurch gekennzeichnet, dass** sie ein Wassereis, ein Eis, ein Milcheis, ein Sahneeis, ein Fruchteis, ein Sorbet oder ähnliches ist.

8. Verwendung einer Mischung aus Erythritol und einer Verbindung, die aus der Gruppe ausgewählt ist, die aus den Dextrinen und den unverdaulichen Dextrinen allein oder in Mischung besteht, in einer gefrorenen Süßspeise.

## Claims

1. Frozen dessert, comprising erythritol, as a sweetening and texturising agent, and an agent for controlling the melting of the frozen dessert chosen from the group constituted by dextrines and indigestible dextrines, on their own or in a mixture with one another.

2. Frozen dessert according to claim 1, **characterised by** the fact that it comprises from 5 to 99% by weight erythritol in relation to the sweetening and texturising agent.

3. Frozen dessert according to claim 1 or 2, **characterised by** the fact that it comprises additionally at least one intense sweetener.

4. Frozen dessert according to any one of claims 1 to 3, **characterised by** the fact that said agent for controlling the melting of the frozen dessert is hydrogenated.

5. Frozen dessert according to any one of claims 1 to 4, **characterised by** the fact that it is lactose free, the frozen dessert being thus low-calorie, non-cariogenic and non-laxative.

6. Frozen dessert according to claim 5, **characterised by** the fact that it comprises from 30 to 70% by weight erythritol in relation to the sweetening and texturising agent.

7. Frozen dessert according to any one of claims 1 to 6, **characterised by** the fact that it is a water-based ice cream, an ice, a milk-based ice cream, an ice-cream, a fruit ice cream, a sorbet or equivalent.

8. Use of a mixture of erythritol and of a compound chosen from the group constituted by dextrines and indigestible dextrines, on their own or in a mixture with one another in a frozen dessert.
